Europäisches Patentamt

European Patent Office

Office européen des brevets

(11) Publication number:

**0 351 920**
**A2**

# (12) EUROPEAN PATENT APPLICATION

(21) Application number: **89201882.1**

(22) Date of filing: **17.07.89**

(51) Int. Cl.⁴: **H01K 1/62 , H05B 39/00**

(30) Priority: **22.07.88 DE 3824904**

(43) Date of publication of application:
**24.01.90 Bulletin 90/04**

(84) Designated Contracting States:
**BE DE FR GB NL**

(71) Applicant: **N.V. Philips' Gloeilampenfabrieken**
**Groenewoudseweg 1**
**NL-5621 BA Eindhoven(NL)**
(84) **BE FR GB NL**

Applicant: **Philips Patentverwaltung GmbH**
**Wendenstrasse 35 Postfach 10 51 49**
**D-2000 Hamburg 1(DE)**
(84) **DE**

(72) Inventor: **Bock, Antoon Joseph**
**Heereveldje 8**
**NL-6381 EW Landgraaf(NL)**
Inventor: **Kinkartz, Hermann**
**Oberfarstbacher Strasse 56**
**D-5100 Aachen(DE)**
Inventor: **Löhn, Klaus**
**Klara-Viebig-Strasse 13**
**D-5107 Lammersdorf(DE)**
Inventor: **Schnedler, Erwin**
**Ronheiderweg 49**
**D-5100 Aachen(DE)**

(74) Representative: **Rooda, Hans et al**
**INTERNATIONAAL OCTROOIBUREAU B.V.**
**Prof. Holstlaan 6**
**NL-5656 AA Eindhoven(NL)**

(54) Circuit arrangement for operating an electric incandescent lamp from an alternating voltage source and incandescent lamp for operation in such a circuit arrangement.

(57) A circuit arrangement for operating an electric incandescent lamp from an alternating voltage source having a frequency between 1 MHz and 1 GHz.

FIG. 1

**Circuit arrangement for operating an electric incandescent lamp from an alternating voltage source and incandescent lamp for operation in such a circuit arrangement.**

The invention relates to a circuit arrangement for operating an incandescent lamp from an alternating voltage source, which arrangement has conductors leading to output terminals.

Electric incandescent lamps are usually operated with direct voltage or with low-frequency alternating voltage (50 to 60 Hz). An alternating voltage operation at higher frequency seems to be ineffective because the increased complication of the circuit associated therewith is not compensated for by a noticeable technical or commercial advantage.

Therefore, the invention has for its object to provide a circuit arrangement for operating electric incandescent lamps, by means of which a substantial lengthening of the life of incandescent lamps can be attained, also when the efficiency remains unchanged.

According to the invention, this object is achieved in a circuit arrangement of the kind mentioned in the opening paragraph in that the circuit arrangement produces an alternating voltage having a frequency between 1 MHz and 1 GHz.

By this circuit arrangement, a substantial lengthening of the life of incandescent lamps can be attained. This is apparently based on a changed conduction mechanism in the helical filament at the very high frequencies. In a straight wire, the current is conducted at high frequency only in a thin layer at the surface of the wire. This so-called Skin effect ensures that the resistance of the wire for high frequencies is higher than that for low-frequency alternating current or for direct currents. In addition, the burning-through mechanism of filament wires changes due to the Skin effect because a part of reduced thickness of the wire or an area at a slightly increased filament temperature does not lead to the same extent to an increase of the resistance at this area, as in the case of the same filament wire, through which direct current or low-frequency alternating current flows in the whole wire diameter. Therefore, the interaction between the disturbance of the wire and the more rapid decrease of the cross-section associated therewith at the area of the disturbance, is smaller with high-frequency operation of the lamp than with direct current or low-frequency alternating current operation. Lengthenings of the life by a factor up to 10 resulting from high-frequency operation were already observed.

The resistance increased by the Skin effect moreover ensures that the filament wire of an incandescent lamp with the same applied voltage can be chosen to be considerably thicker in the case of high-frequency supply than with direct supply voltage or low-frequency supply voltage. As is known, however, the life of lamps having thick wires is in itself already greater than that of lamps having thin wires at the same filament temperature, power and light output. Due to this additional effect, the life of a lamp supplied with very high frequency alternating voltage can be still further increased by the choice of thicker filament wires.

The Skin effect is additionally increased by the mutual influencing of the turns in a helically wound wire (Proximity Effect) so that the helical shape proves to be particularly favourable with operation with high-frequency alternating current.

At the very high frequencies, the equivalent circuit diagram of a helical filament of an incandescent lamp consists of a series-combination of an inductor L and of a resistor R, the resistor R being the resistance of the filament wire at the operating temperature increased by Skin and Proximity effects. The inductance L of the helical filament must be compensated for when using alternating voltage sources having an ohmic inner resistance, in order to obtain an optimum power adaptation. This can be attained if according to a further embodiment of the circuit arrangement in accordance with the invention, a capacitor shunts the output terminals and/or is included in a conductor leading to an output terminal. In this case, the inductance L of the helical filament of an incandescent lamp to be connected to the output terminals and the capacitance C of the capacitor additionally included constitute a parallel or series oscillatory circuit having an angular frequency

$$\omega = \frac{1}{\sqrt{L \cdot C}}$$

The invention further relates to an incandescent lamp for operation in the circuit arrangement described.

Since at the high operating frequencies used the current flows in the helical filament of this lamp substantially at the wire surface due to the Skin effect, the helical filament heed not consist of a solid wire, but according to the invention it may consist of a helically wound tube.

In case of the relevant high-frequency operation of the incandescent lamp, a gas discharge may occur in the axis of the helical filament and this gas discharge may lead to the destruction of the helical filament. In order to avoid this, according to a preferred embodiment in accordance with the invention, the incandescent lamp contains a filling of rare gas, as the case may be a halogen and 0.01 to 10 bar nitrogen (filling pressure). In this case, the added nitrogen results in the extinction of a gas discharge on the axis of the helical filament. A low nitrogen filling pressure is sufficient at comparatively low frequencies, while a higher filling pressure is sufficient at higher frequencies. Alternatively, breakdown may be counteracted in that the lamp is provided with a comparatively large quantity of halogen or halogen compound, such as hydrogen halide or halogenated hydrocarbon. The use of rare gas, for example krypton or argon, having a high filling pressure, for example having a pressure of 8 to 70 bar, is very attractive.

Electromagnetic interference radiation, which may occur at high frequencies of the supply voltage of the incandescent lamp, can be shielded by an electrically conducting sleeve surrounding the incandescent lamp. According to the invention, this can be effected in that the lamp envelope is provided with an electrically conductive coating, which is connected to a connection terminal of the circuit arrangement, which is applied to earth potential. Such an electrically conductive coating consists, for example, of fluorine-doped tin dioxide.

The incandescent lamp according to the invention can be arranged, however, in a housing, which consists of a reflector and a cover disk and which is provided with an electrically conductive coating, which is connected to an output terminal of the circuit arrangement applied to earth potential. In this case, for example, the reflector may consist of metal and a metallic grid may be applied to or provided in the cover disk. The circuit arrangement and the incandescent lamp can be combined to form a unit, which may be connected, for example, to a conventional A.C. voltage supply mains.

In order that the invention may be readily carried out, it will now be described more fully with reference to the accompanying drawing, in which:

Figure 1 shows the principle of a circuit arrangement for operating an electric incandescent lamp from an alternating voltage source,

Figure 2a shows a modified circuit arrangement of this kind, and

Figure 2b shows a corresponding equivalent circuit diagram,

Figure 3a shows an also modified circuit arrangement, and

Figure 3b shows the corresponding equivalent circuit diagram,

Figure 4 shows an electric incandescent lamp provided with an electrically conductive coating, which can be used in the circuit arrangements shown in Figures 1 to 3,

Figure 5 is a longitudinal sectional view of a lamp unit provided with an incandescent lamp, a reflector and a cover disk,

Figure 6 is the side elevation of a lamp unit shown in Figure 5 with an integrated circuit, and

Figure 7 is a partial elevation on an enlarged scale of an incandescent lamp having a tubular helical filament.

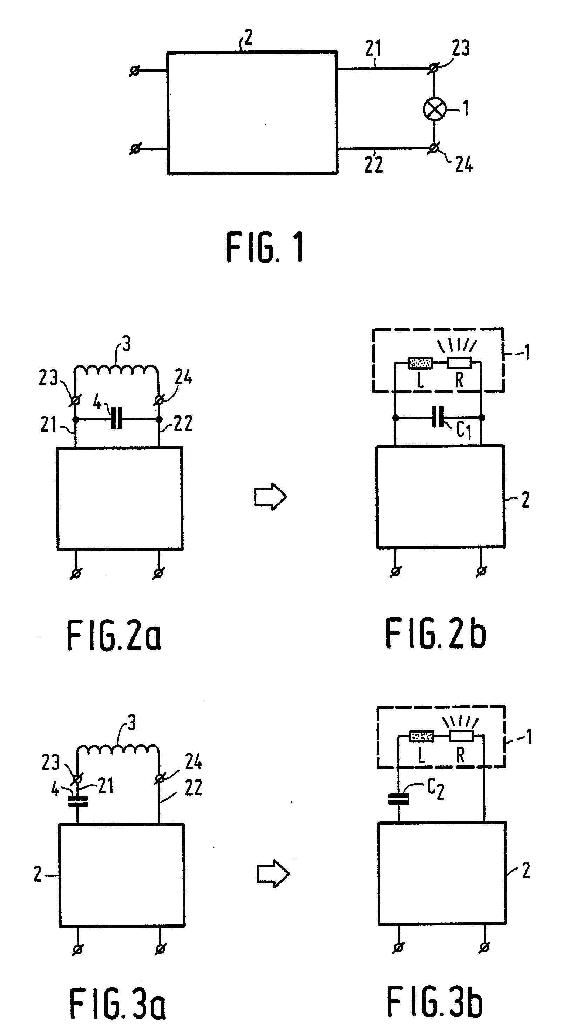

In the circuit arrangement shown in Figure 1, an electric incandescent lamp 1 is connected to a high-frequency generator 2, which produces an alternating voltage having a frequency between 1 MHz and 1 GHz. The circuit arrangement has conductors 21, 22 leading to the output terminals 23, 24. In Figures 2a and 3a, only the helical filament 3 of the incandescent lamp 1 connected to the high-frequency generator 2 is shown. In Figure 2a, a capacitor 4 is connected parallel to the helical filament 3 and thus shunts the output terminals 23, 24, while in Figure 3a a capacitor 4 is connected in series with the helical filament 3 included in the conductor 21. Figures 2b and 3b show the corresponding equivalent circuit diagrams, in which the helical filament 3 consists of a series-combination of an inductor L and of a resistor R, which is the resistance of the helical filament 3 at the operating temperature increased by Skin and Proximity Effects. $C_1$ denotes the capacitance of the parallel capacitor and $C_2$ denotes the capacitance of the series capacitor 4. The capacitance C and the inductance L constitute a parallel or series oscillatory circuit having an angular frequency

$$\omega = \frac{1}{\sqrt{L \cdot C}}$$

If the inner resistance of the high-frequency generator is higher or lower than the real resistance of the helical filament resulting after the compensation by the capacitor C, the compensation must be effected by

3

means of an additional transformer or additional matching networks comprising several capacitors and/or coils (see, for example, Meinke-Grundlach, Taschenbuch der Hochfrequenztechnik, Chap. B 10-16). In this case, for example, two capacitors may be used in common, i.e. a parallel capacitor $C_1$ and a series capacitor $C_2$.

Practical embodiments are now described:

a) Halogen incandescent lamp type 7388 6 V, 20 W, having a helical filament comprising 10 turns. If the lamp is operated with an alternating voltage of 50 Hz at a temperature of 3500 K, it reaches an average life of 20 hours. In the case of a high-frequency current supply at a frequency of 90 MHz, the lamp reaches at the same temperature of the helical filament an average life of 65 hours.

b) Halogen lamp type H3 6 V, 55 W. The helical filament consists of ten turns. In the case of an operation with an alternating voltage of 50 Hz at a temperature of the helical filament of 3500 K, the lamp reaches an average life of 35 hours. In the case of a high-frequency current supply at a frequency of 90 MHz, the life of this lamp is increased to about 180 hours with unchanged filament temperature.

c) Halogen incandescent lamp type H3 12 V, 55 W. The helical filament comprises eighteen turns. In the case of alternating voltage operation at 50 Hz and a filament temperature of 3500 K, the average life of the lamp is 50 hours. With the use of a high-frequency current supply at a frequency of 90 MHz, the life of this lamp is increased to about 150 hours with unchanged filament temperature.

In the practical measurements, a commercially available high-frequency generator 2 having an inner resistance of 50 Ω was used. The matching and compensation network consisted of two trimming capacitors $C_1$ and $C_2$ having each a capacitance of 100 pF.

In these measurements, the high-frequency output voltage of the generator 2 was about 20 to 30 V. Upon the addition of the capacitors $C_1$ and $C_2$ to the circuit, a high-frequency supply voltage of up to about 200 V was measured at the helical filament. The lamps had a filling of 5 bar krypton, 0.005 bar methylene dibromide and 0.2 bar nitrogen.

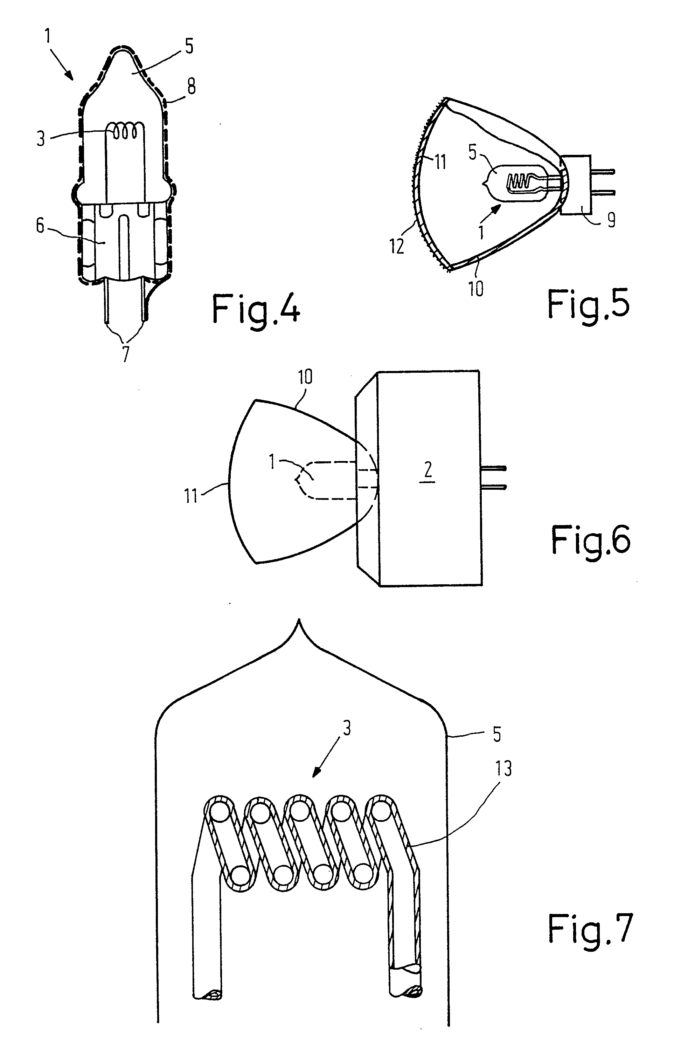

Figure 4 shows an incandescent lamp 1 suitable for the circuit arrangements described. This lamp has a lamp envelope 5, which is provided at one side with a pinch 6, in which current supply conductors 7 for the helical filament 3 are sealed. For shielding of electromagnetic radiations, the lamp envelope 5 is provided with an electrically conductive coating 8 consisting, for example, of fluorine-doped tin dioxide, which is connected to one of the current supply conductors 7 and hence in operation to a connection of the high-frequency generator 2, i.e. to the connection applied to earth potential.

In the lamp unit shown in Figure 5, an incandescent lamp 1 having an uncoated lamp envelope 5 is secured to a base 9. The incandescent lamp 1 is arranged in a metal reflector 10 which is covered by a glass cover disk 11, which is provided with a metallic grid 12. The metal reflector 10 and the metal grid 12 are connected to one of the current supply conductors of the incandescent lamp 1 and hence to a connection of the high-frequency generator (earth potential).

Figure 6 shows the incandescent lamp 1, combined with a reflector 10, a cover disk 11 and a high-frequency generator 2 to form a unit, which can be connected directly or through a high-frequency filter to a normal alternating voltage mains.

Figure 7 shows the upper part of an incandescent lamp, in whose envelope 5 a helical filament 3 is arranged, whose coiled wire 13 is tubular. In comparison with a solid wire, in this case material is saved.

Examples of standard lamps which were operated with a high-frequency alternating current are shown in Table 1.

TABLE 1

| Lamp | ∅ filament wire (μm) | frequency (MHz) |
|---|---|---|
| 12 V/50 W | 170 | 32 |
| 12 V/50 W | 145 | 130 |
| 12 V/300 W | 580 | 5.2 |

According as the frequency of the alternating current increases, the conductivity of a lamp decreases. In order that a predetermined energy is dissipated in the lamp, an increased voltage is then required. The risk of breakdown in the lamp strongly increases at frequencies above 1 GHz.

The dependence of the effective voltage across a lamp upon the frequency to reach the same operating temperature is indicated for various lamps in Table 2.

TABLE 2

| lamp | 470 MHz | 90 MHz | 30 MHz | 50 Hz |
|---|---|---|---|---|
| 6 V/20 W | 331 V | 57 V | 27 V | 7.1 V |
| 6 V/55 W | 874 V | 158 V | 67 V | 8.0 V |
| 12 V/55 W | 1120 V | 148 V | 88 V | 15.0 V |

## Claims

1. A circuit arrangment for operating an electric incandescent lamp from an alternating voltage source, which arrangement has conductors leading to output terminals, characterized in that the alternating voltage source (2) produces an alternating voltage having a frequency between 1 MHz and 1 GHz.

2. A circuit arrangement as claimed in Claim 1, characterized in that a capacitor (4) is connected parallel to and/or in series with the helical filament (3) of the incandescent lamp (1).

3. An incandescent lamp for operating in a circuit arrangement claimed in Claim 1 or 2, comprising a lamp vessel, which is filled with gas and in which a helical filament is arranged, characterized in that the helical filament (3) consists of a tube (13) of helical shape.

4. An incandescent lamp for operation in a circuit arrangement claimed in Claim 1 or 2, characterized in that the filling of the lamp envelope (5) contains rare gas, as the case may be halogen, and 0.01 to 10 bar nitrogen.

5. An incandescent lamp for operation in a circuit arrangement claimed in Claim 1 or 2, characterized in that the lamp has a gas filling containing rare gas at a pressure of 8 to 70 bar.

6. An incandescent lamp for operation in a circuit arrangement claimed in Claim 1 or 2, characterized in that the lamp envelope (5) is provided with an electrically conductive coating (8), which is connected to a connection of the alternating voltage source (2), which is applied to earth potential.

7. An incandescent lamp for operation in a circuit arrangement claimed in Claim 1 or 2, characterized in that the incandescent lamp (1) is arranged in a housing, which consists more particularly of a reflector (10) and a cover disk (11) and is provided with an electrically conductive coating (12), which is connected to a connection of the alternating voltage source (2), which is applied to earth potential.

8. An incandescent lamp for operation in a circuit arrangement claimed in Claim 1 or 2, characterized in that the circuit arrangement (2) and the incandescent lamp (1) are combined to form a unit.

FIG. 1

FIG.2a

FIG.2b

FIG.3a

FIG.3b

Fig.4

Fig.5

Fig.6

Fig.7

2-Ⅱ-PHD 88-147